# EUROPÄISCHE PATENTANMELDUNG

(11) **EP 4 050 539 A1**
(43) Veröffentlichungstag der Anmeldung: **31.08.2022**
(21) Anmeldenummer: 21159570.7
(22) Anmeldetag: 26.02.2021
(51) Int. Cl.: G06Q 10/06

(54) **VERFAHREN ZUM ERMITTELN EINES SCHÄTZWERTES FÜR EINE ANZAHL VON PERSONEN IN EINEM VORBESTIMMTEN BEREICH**

(71) Anmelder: Siemens Mobility GmbH, 81739 München (DE)
(72) Erfinder: Dr. Koberg, Henrik, 80799 München (DE)

(57) **Zusammenfassung**

Die Erfindung betrifft ein Verfahren zum Ermitteln eines Schätzwertes (14) für eine Anzahl von Personen (2) in einem vorbestimmten Bereich, insbesondere einem öffentlichen Verkehrsmittel (1) oder Bahnsteig,
bei dem zunächst ermittelt wird, dass sich wenigstens ein mobiles Gerät (3, 3') in dem vorbestimmten Bereich befindet, bei dem anschließend von dem wenigstens einen mobilen Gerät (3, 3') eine Suche nach Bluetooth-Signalen (12) in dessen Umgebung durchgeführt wird und
bei dem unter Berücksichtigung der gefundenen Bluetooth-Signale (12) ein Schätzwert (14) für die Anzahl von Personen (2) in zumindest einem Abschnitt des vorbestimmten Bereichs ermittelt wird.

Das erfindungsgemäße Verfahren bietet eine kostengünstige Möglichkeit, um ein Schätzwert (14) für eine Personenzahl in einem vorbestimmten Bereich in Echtzeit zu ermitteln.

Die Erfindung betrifft auch ein Computerprogrammprodukt, eine Bereitstellungsvorrichtung, einen Server-Computer und ein mobiles Gerät.

## Beschreibung

Die Erfindung betrifft ein Verfahren zum Ermitteln eines Schätzwertes für eine Anzahl von Personen in einem vorbestimmten Bereich, insbesondere einem öffentlichen Verkehrsmittel oder Bahnsteig.

Die Erfindung betrifft weiterhin einen Server-Computer und ein mobiles Gerät jeweils zum Ermitteln eines Schätzwertes für eine Anzahl von Personen in einem vorbestimmten Bereich, insbesondere einem öffentlichen Verkehrsmittel oder Bahnsteig.

Durch eine Zunahme der Bevölkerungszahlen insgesamt und besonders in Städten kommt es immer häufiger zu einer erhöhten Personendichte in bestimmten öffentlichen Bereich. Derartige Bereiche können beispielsweise öffentliche Verkehrsmittel und damit in Verbindung stehende Bereiche wie Bahnsteige oder Bahnhofsbereiche sein. Weitere Bereiche, an denen hohe Personendichten auftreten, können öffentliche Plätze, beispielsweise bei Märkten oder Großveranstaltungen, oder auch Räume von Veranstaltungsorten wie Konzerthallen oder Sportarenen sein.

Eine hohe Personendichte kann als unangenehm empfunden werden und auch ein höheres Risiko darstellen, wie beispielsweise bei der Übertragung von Infektionen oder zum Ausbrechen einer Panik. Dieses Bewusstsein ist insbesondere durch die COVID 19-Pandemie verstärkt worden. Im Folgenden wird vor allem auf die erhöhte Personendichte in öffentlichen Verkehrsmitteln eingegangen, aber die Problematik und Lösung lässt sich auch auf andere zuvor beispielhaft genannte Bereiche übertragen.

Im öffentlichen Verkehr gehören Komfort, Zuverlässigkeit und Sicherheit zu den entscheidenden Erfolgsfaktoren. Diese hängen auch davon ab, wie gleichmäßig Fahrgäste sich in öffentlichen Verkehrsmitteln verteilen. Auch hier wird eine hohe Personendichte von Fahrgästen als unangenehm empfunden und kann aufgrund von längeren Ein- und Aussteigezeiten zu Verspätungen und anderen Problemen führen. Darüber hinaus erhöht sich auch hierdurch das Risiko der Übertragung von Infektionen. Hohe Personendichten von vorneherein zu vermeiden wird zunehmend schwieriger. Es fehlt an Platz, um den stetigen Zustrom in den Städten durch allgemeine Kapazitätserweiterung aufzufangen. Weiterhin ist durch Pandemien wie COVID-19 das Fahrgastaufkommen teilweise unvorhersehbarer geworden. Die Nachfrage im öffentlichen Verkehr schwankt beispielsweise mit dem Infektionsgeschehen und möglichen staatlichen Maßnahmen.

Es besteht also ein Bedarf eine Anzahl von Personen in vorbestimmten Bereichen wie öffentlichen Verkehrsmitteln zu ermitteln, um beispielsweise einem akuten Andrängen im täglichen Betrieb entgegenzuwirken und Fahrgäste auf intelligente Weise zu lenken.

Die Ermittlung einer Anzahl von Personen in öffentlichen Verkehrsmitteln gehört mittlerweile zu den Standardaufgaben in diesem Bereich.

Herkömmliche Verfahren nutzen beispielsweise eine spezielle Ausstattung in Fahrzeugen oder an Stationen, wie beispielsweise Lichtschranken, Gewichtssensoren oder Kameras. Die Anschaffung und der Einbau solcher Geräte sind allerdings mit hohen Kosten verbunden. Weiterhin ist ein Einbau oft nur schwer im laufenden Betrieb möglich, sondern muss im Depot in Betriebspausen erfolgen. Daher sind in vielen Städten öffentliche Verkehrsmittel nicht flächendeckend mit solchen Geräten ausgestattet. Eine Datenerhebung ist daher häufig auf Stichproben und punktuelle Informationen beschränkt. Solche Stichproben werden an verschiedenen Orten und zu verschiedenen Zeiten durchgeführt und die gesammelten Daten werden hochgerechnet. Die Daten werden als Basis für langfristige Entscheidungen herangezogen, wie beispielsweise zur Fahrplanumstellung und Kapazitätsplanung.

Für eine kurzfristige Auslastungserfassung sind diese Methoden oft wenig geeignet. Zur Entschärfung akuter Auslastungsprobleme wäre dagegen eine Erfassung möglichst in Echtzeit und für alle Fahrzeuge wünschenswert. Statistische Auswertung über längere Zeiträume kommen daher weniger in Frage. Darüber hinaus sind beispielsweise während einer Pandemie durch gestiegene Fluktuation einzelne Stichproben weniger aussagekräftig.

Neben den herkömmlichen Verfahren existieren alternative, weniger verbreitete Verfahren. So können beispielsweise die Daten von Mobilfunkbetreibern genutzt werden. Aus der Anzahl von Mobilfunkgeräten, die mit einem Funkmast verbunden sind, kann eine Personenmenge in dessen Nähe geschätzt werden. Die räumliche Genauigkeit des Verfahrens ergibt sich aus den Distanzen zwischen den Funkmasten. Allerdings können diese Verfahren bei der Nutzung für öffentliche Verkehrsmittel problematisch sein, wenn Abstände zwischen Haltestellen sehr kurz sind, was im städtischen Raum üblich ist. Bei anderen Verfahren werden Mobilfunkgeräte von Fahrgästen anhand von WiFi-Signalen aufgespürt. Dabei wird beispielsweise mit Hilfe vorhandener WiFi-Router die Umgebung nach sogenannten Probe Requests abgetastet, die Mobilfunkgeräte auf der Suche nach WiFi-Zugangspunkten aussenden. Die technischen Voraussetzungen für dieses Verfahren sind heutzutage bei vielen Mobilfunkgeräten aber nicht mehr vorhanden, so dass ein Einsatz nicht in Frage kommt.

Der Erfindung liegt also die Aufgabe zugrunde, ein Verfahren bereitzustellen, mit dem eine Personenzahl in einem vorbestimmten Bereich zuverlässig und schnell abgeschätzt werden kann.

Erfindungsgemäß wird diese Aufgabe gelöst durch ein Verfahren zum Ermitteln eines Schätzwertes für eine Anzahl von Personen in einem vorbestimmten Bereich, insbesondere einem öffentlichen Verkehrsmittel oder Bahnsteig,
bei dem zunächst ermittelt wird, dass sich wenigstens ein mobiles Gerät in dem vorbestimmten Bereich befindet,
bei dem anschließend von dem wenigstens einen mobilen Gerät eine Suche nach Bluetooth-Signalen in dessen Umgebung durchgeführt wird und
bei dem unter Berücksichtigung der gefundenen Bluetooth-Signale ein Schätzwert für die Anzahl von Personen in zumindest einem Abschnitt des vorbestimmten Bereichs ermittelt wird.

Ferner wird die Aufgabe gelöst durch einen erfindungsgemäßen Server-Computer zum Ermitteln eines Schätzwertes für eine Anzahl von Personen in einem vorbestimmten Bereich, insbesondere einem öffentlichen Verkehrsmittel oder Bahnsteig,
wobei der Server-Computer zum Empfangen von Bluetooth-Signalen in der Umgebung von wenigstens einem in dem vorbestimmten Bereich befindlichen mobilen Gerät oder von Daten in Zusammenhang mit den Bluetooth-Signalen ausgebildet ist, die von dem wenigstens einen mobilen Gerät bei einer Suche nach Bluetooth-Signalen in der Umgebung gefunden wurden,
und der Server-Computer zum Ermitteln eines Schätzwertes für die Anzahl von Personen in zumindest einem Abschnitt des vorbestimmten Bereichs ausgebildet ist.

Schließlich wird die Aufgabe erfindungsgemäß gelöst durch ein mobiles Gerät zum Ermitteln eines Schätzwertes für eine Anzahl von Personen in einem vorbestimmten Bereich, insbesondere einem öffentlichen Verkehrsmittel oder Bahnsteig,
wobei das mobile Gerät ausgebildet ist, zu ermitteln, dass es sich in dem vorbestimmten Bereich befindet, und ausgebildet ist, anschließend eine Suche nach Bluetooth-Signalen in seiner Umgebung durchzuführen,
und ausgebildet ist, unter Berücksichtigung der gefundenen Bluetooth-Signale, den Schätzwert für die Anzahl von Personen in zumindest einem Abschnitt des vorbestimmten Bereichs zu ermitteln, oder die empfangenen Bluetooth-Signale oder zumindest Daten in Zusammenhang mit den empfangenen Bluetooth-Signalen an wenigstens einen Server-Computer zum Ermitteln des Schätzwerts zu übermitteln.

Die erfindungsgemäße Lösung hat den Vorteil, dass auf sehr einfache Weise eine zuverlässige Schätzung der Personenzahl in dem vorbestimmten Bereich durchgeführt werden kann. Da für die Erfindung zumindest größtenteils die mobilen Geräte, wie beispielsweise Smartphones, der Personen in dem vorbestimmten Bereich genutzt werden kann, ist diese Lösung besonders kostengünstig umsetzbar. Zur Umsetzung der Erfindung wird eine entsprechende Software, beispielsweise in Form einer App, auf den mobilen Geräten der Fahrgäste installiert. Die Software kann auch als Computerprogrammprodukt bezeichnet werden. Diese spezielle Software wird zur Durchführung des Verfahrens auf dem mobilen Gerät ausgeführt. Fahrgäste oder Personal in öffentlichen Verkehrsmitteln führen üblicherweise mobile Geräte wie Mobiltelefone oder Smartphones mit sich, auf denen eine solche Software in Form einer App installiert sein kann. Eine solche App kann zum Beispiel eine Fahrplanauskunfts-App sein. Diese kann dann ein spezielles Modul für die erfindungsgemäße Auslastungsmessung für den vorbestimmten Bereich enthalten. Vorteilhafterweise ist für die erfindungsgemäße Lösung keine zusätzliche Hardware notwendig.

Zunächst ermittelt das erfindungsgemäße Verfahren in einem ersten Schritt, ob sich das mobile Gerät in dem vorbestimmten Bereich befindet. Es wird also bestimmt, ob sich beispielsweise das Smartphone eines Fahrgastes in einem Fahrzeug eines öffentlichen Verkehrsmittels befindet. Wenn dies der Fall ist, werden die nächsten Schritte des erfindungsgemäßen Verfahrens ausgeführt. Dieser Schritt hat den Vorteil, dass das erfindungsgemäße Verfahren nicht permanent durchgeführt werden muss und dadurch Energie und Rechenleistung auf dem mobilen Gerät gespart wird. Die Ermittlung der Position kann auf unterschiedliche technische Weise durchgeführt werden wie im Folgenden noch beschrieben wird, wobei hier die auf Smartphones vorhandene Technik sehr gut zur Hilfe genommen werden kann. Wenn also ermittelt worden ist, dass sich das mobile Gerät in dem vorbestimmten Bereich befindet, wird der nächste Schritt des erfindungsgemäßen Verfahrens durchgeführt.

In diesem nächsten Schritt wird von der Software auf dem mobilen Gerät ein Bluetooth-Scanning ausgelöst, bei dem eine Suche nach Bluetooth-Signalen in dessen Umgebung durchgeführt wird. Bei dem Bluetooth-Scanning wird die Umgebung in regelmäßigen Abständen nach Bluetooth-Signalen abgesucht, die auch als Bluetooth-Nachrichten bezeichnet werden können. Die gefundenen Bluetooth-Signale werden von dem mobilen Gerät erfasst und ggf. zumindest zeitweise gespeichert.

Im nächsten Schritt des erfindungsgemäßen Verfahrens wird unter Berücksichtigung der gefundenen Bluetooth-Signale ein Schätzwert für die Anzahl von Personen in dem vorbestimmten Bereich, wie beispielsweise dem öffentlichen Verkehrsmittel, ermittelt. Zur Ermittlung des Schätzwertes können die gefundenen Bluetooth-Signale oder damit im Zusammenhang stehende Daten auf verschiedene Weisen analysiert werden, wie im Folgenden beschrieben ist.

Der von dem erfindungsgemäßen Verfahren ermittelte Schätzwert für die Anzahl von Personen im vorbestimmten Bereich kann anschließend auf verschiedene Weise weiterverwendet werden. Beispielsweise können Fahrgäste auf einem Bahnsteig so gelenkt werden, dass sie in wenig belegte Bereiche eines einfahrenden Zuges einsteigen.

Gegenüber anderen Methoden zum Abschätzen einer Personenzahl besteht bei der erfindungsgemäßen Lösung ein erheblicher Kostenvorteil. Das erfindungsgemäße Verfahren erfordert wenig bis keine zusätzliche Hardware und kann sofort weitreichend ausgerollt werden, beispielsweise in einen gesamten Fahrzeugbestand eines öffentlichen Verkehrsnetzes. So können durch die erfindungsgemäße Lösung kritische Personendichten im Wesentlichen in Echtzeit und flächendeckend erfasst und anschließend entschärft werden. Eine gewisse Unschärfe durch die Schätzung der Personenzahl durch das erfindungsgemäße Verfahren ist unproblematisch, weil für die genannten Anwendungsfälle die vorhandene Genauigkeit ausreichend ist. So ist beispielsweise eine Unterteilung bei öffentlichen Verkehrsmitteln in grobe Auslastungskategorien, wie beispielsweise "leer", "fast leer", "fast voll", "voll", möglich und vollkommen ausreichend.

Die erfindungsgemäße Lösung kann durch vorteilhafte Ausgestaltungen weiterentwickelt werden, die im Folgenden beschrieben sind.

So können beim Ermitteln des Schätzwertes Bluetooth-Signale berücksichtigt werden, die von mehreren mobilen Geräten empfangen wurden. Für das erfindungsgemäße Verfahren können in dieser Ausprägung somit eine Vielzahl von mobilen Geräten genutzt werden, was die Genauigkeit und Aussagekraft erheblich verbessert. Beispielsweise in einem öffentlichen Verkehrsmittel kann durch das erfindungsgemäße Verfahren, wenn es auf einer Vielzahl in dem öffentlichen Verkehrsmittel gleichmäßig verteilten mobilen Geräten ausgeführt wird, eine sehr gute Abschätzung über die Personendichte in verschiedenen Bereichen des öffentlichen Verkehrsmittels ermittelt werden.

In einer vorteilhaften Ausgestaltung des erfindungsgemäßen Verfahrens können beim Ermitteln des Schätzwertes Identifikationsmittel der empfangenen Bluetooth-Signale berücksichtigt werden. Solche Identifikationsmittel, die auch als ID bezeichnet werden, können Aussagen über die Geräte machen, von denen die Bluetooth-Signale ausgesendet wurden. Hier können entsprechende Auswertungen gemacht werden, um die Genauigkeit des Schätzwertes zu verbessern. Bluetooth-Signale werden beispielsweise von Smartphones, Laptops, Smartwatches, Geräte zum Auffinden von Gegenständen ausgesendet. Folglich kann anhand des Identifikationsmittels beispielsweise ermittelt werden, von welcher Art von Gerät das Bluetooth-Signal stammt. In diesem Zusammenhang können beispielsweise Bluetooth-Signale von bestimmten Gerätekategorien ignoriert oder geringer gewichtet werden, beispielweise von Smartwatches, weil davon auszugehen ist, dass Personen mit Smartwatches meist auch ein Smartphone bei sich tragen.

Um die Genauigkeit der Ermittlung des Schätzwertes zu verbessern, können die Signalstärken der empfangenden Bluetooth-Signale erfasst und beim Ermitteln des Schätzwertes berücksichtigt werden. Bluetooth-Signale werden in einem Nahbereich bis zu maximal 100 Metern ausgesendet. Die Signalstärke nimmt mit der Entfernung von der Bluetooth-Quelle ab. Die Signalstärke ist somit repräsentativ für einen Abstand zur Bluetooth-Quelle und kann bei der Ermittlung des Schätzwertes genutzt werden. Beispielsweise können Bluetooth-Signale mit einer Signalstärke unterhalb eines festgelegten Grenzwertes ignoriert bzw. herausgefiltert werden.

Ferner können Ursprünge bzw. Signalquellen der empfangenen Bluetooth-Signale ermittelt und beim Ermitteln des Schätzwertes berücksichtigt werden.

In einer vorteilhaften Ausgestaltung kann die Ermittlung des Schätzwertes auf dem mobilen Gerät durchgeführt werden. Dies hat den Vorteil, dass keine Daten im Zusammenhang mit den empfangenen Bluetooth-Signalen übermittelt werden müssen, beispielsweise an einen Server-Computer. Ddadurch ist ein hoher Datenschutz gewährleistet. In dieser Ausgestaltung kann das komplette erfindungsgemäße Verfahren auf dem mobilen Gerät durchgeführt werden.

Alternativ können die empfangenen Bluetooth-Signale oder zumindest Daten im Zusammenhang mit den empfangenen Bluetooth-Signalen an wenigstens einen Server-Computer oder anderen externen Computer übermittelt werden und der Schätzwert durch den Server-Computer oder externen Computer ermittelt werden. Dies hat den Vorteil, dass die empfangenen Bluetooth-Signale von mehreren mobilen Geräten auf dem Server-Computer zusammengeführt und analysiert werden können und dadurch die Genauigkeit des Schätzwerts für die Personenanzahl in dem vorbestimmten Bereich verbessert werden kann. Auf dem Server-Computer können die von unterschiedlichen mobilen Geräten geschickten Bluetooth-Signale miteinander verglichen werden und beispielsweise anhand der Identifikationsmittel der empfangenen Bluetooth-Signale ausgewertet werden können. Um Energie einzusparen und die Kapazität der drahtlosen Datenübermittlung zum Server-Computer wenig zu belasten, kann die Datenmenge der empfangenen Bluetooth-Signale vor dem Übermitteln reduziert werden.

In einer vorteilhaften Weiterbildung des erfindungsgemäßen Verfahrens können die empfangenen Bluetooth-Signale von mehreren mobilen Geräten oder Teile davon oder die ermittelten Schätzwerte gruppiert werden, insbesondere durch Ermitteln einer räumlichen und/oder zeitlichen Nähe, und mittels der Gruppen ein Schätzwert für eine Personendichte an einem Ort und/oder zu einer Zeit ermittelt werden. Dieses Gruppieren kann die Genauigkeit des Schätzwertes erhöhen.

Ferner kann zum Ermitteln, dass sich das mobile Gerät in dem vorbestimmten Bereich befindet, eine vom mobilen Gerät ermittelte Position und/oder Signale von wenigstens einem Bluetooth-Beacon ausgewertet werden. Dies hat den Vorteil, dass besonders zuverlässig bestimmt werden kann, ob sich das mobile Gerät in dem vorbestimmten Bereich befindet oder nicht. Die Verwendung von Bluetooth-Beacons beispielsweise in öffentlichen Verkehrsmitteln ist bekannt und bietet eine sehr zuverlässige Möglichkeit, um den vorbestimmten Bereich des öffentlichen Verkehrsmittels zu erkennen. Allerdings müssen die Bluetooth-Beacons in dem Verkehrsmittel installiert werden, was einen Aufwand bedeutet. Alternativ oder zusätzlich können ermittelte GNSSS-Koordinaten (beispielsweise GPS oder Galileo) ausgewertet werden und anzeigen, ob sich das mobile Gerät in dem vorbestimmten Bereich befindet. Wenn die vom mobilen Gerät ermittelte Position mit dem bekannten Fahrverlauf oder Haltepunkt des öffentlichen Verkehrsmittels übereinstimmt, kann angenommen werden, dass sich das mobile Gerät in dem Verkehrsmittel befindet.

Die Erfindung betrifft auch ein Computerprogrammprodukt mit Programmbefehlen zur Durchführung des erfindungsgemäßen Verfahrens nach einer der vorgenannten Ausführungsformen.

Ferner kann das vorgenannte Computerprogrammprodukt in einer Ausgestaltung wenigstens ein mobiles Gerät und/oder wenigstens einen Server-Computer zur Durchführung des erfindungsgemäßen Verfahrens nach einer der vorgenannten Ausführungsformen veranlasst werden, wenn die Programmbefehle durch das mobile Gerät und/oder den Server-Computer ausgeführt werden.

Schließlich wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein App-Store, ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Die Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass dieses das erfindungsgemäße Werkstück erzeugt.

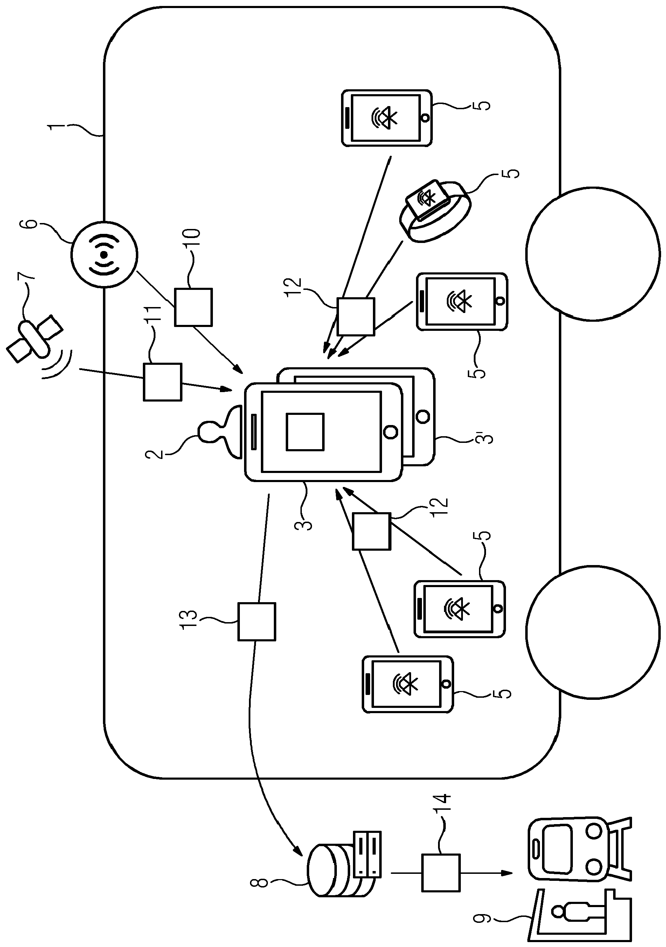

Im Folgenden wird die Erfindung mit Bezug auf die beispielhafte Ausführungsform in der beigefügten Figur erläutert.

Die einzige Figur zeigt eine schematische Darstellung eines öffentlichen Verkehrsmittels, in dem eine beispielhafte Ausführungsform des erfindungsgemäßen Verfahrens ausgeführt wird.

Die Figur zeigt ein öffentliches Verkehrsmittel 1 in Form eines Fahrzeugs 1, das beispielsweise eine U-Bahn, eine Stra-ßenbahn, ein Bus oder ein Regional- oder Fernzug sein kann. Anstatt des Fahrzeugs 1 könnte es sich auch um einen anderen vorbestimmten Bereich handeln, wie beispielsweise eine Veranstaltungshalle oder ein öffentlicher Platz.

In dem Fahrzeug 1 befindet sich eine Person 2, die ein mobiles Gerät 3 mit sich führt. In dem Fahrzeug 1 befinden sich weitere Personen (nicht dargestellt), die ebenfalls mobile Geräte 3' mit sich führen. Die mobilen Geräte 3' sind in diesem Ausführungsbeispiel insbesondere Smartphones. Auf den mobilen Geräten 3, 3' wird jeweils eine Software 4 ausgeführt, die zum Ausführen zumindest von Teilen des erfindungsgemäßen Verfahrens ausgebildet ist.

In dem Fahrzeug 1 befinden sich weiterhin eine Vielzahl von Bluetooth-Quellen 5, wie beispielsweise weitere Smartphones, Laptops, Smartwatches und andere Bluetooth Signale aussendende Geräte.

Schließlich befinden sich in dem Fahrzeug 1 in dieser beispielhaften Ausführungsform ein Bluetooth-Beacon 6.

Außerhalb des Fahrzeugs 1 befinden sich mehrere Satelliten 7, ein Server-Computer 8 und ein Fahrgastleitsystem 9. Die Satelliten 7 senden in bekannter Weise GNSS-Signale aus, mittels denen die mobilen Geräte 3, 3' ihre Position bestimmen können.

Im Folgenden wird die in der Figur dargestellte beispielhafte Ausführungsform des erfindungsgemäßen Verfahrens beschrieben.

Zunächst ermittelt das mobile Gerät 3, 3' durch die darauf installierte Software 4, ob sich das mobile Gerät 3, 3' in dem Fahrzeug 1 befindet. Die Personen 2, die beispielsweise Fahrgäste oder Personal des öffentlichen Verkehrsmittels sein können, führen die mobilen Geräte 3, 3' wie beispielweise Mobiltelefone oder Smartphones, mit sich, auf denen die Software 4 in Form einer App installiert ist. Eine solche App kann beispielsweise eine Fahrplanauskunfts-App sein, die aus einem App-Store heruntergeladen wurde. Diese App kann beispielsweise ein spezielles Modul für die erfindungsgemäße Auslastungsabschätzung mit dem erfindungsgemäßen Verfahren umfassen.

Die erfindungsgemäße Prüfung, ob sich das mobile Gerät 3, 3' in dem Fahrzeug 1 befindet, wird bei der beispielhaften Ausführungsform in der Figur mit Hilfe des verbauten Bluetooth-Beacon 6 und/oder der GNSSS-Signale der Satelliten 7 durchgeführt.

Der Bluetooth-Beacon 6 ist im Fahrzeug 1 verbaut und sendet ein Bluetooth-Signal 10 mit einem vorbestimmten Identifikationsmittel (nicht dargestellt) aus. Anhand des Identifikationsmittels des Bluetooth-Signals 10 kann eindeutig erkannt werden, dass das Bluetooth-Signal 10 von dem in dem Fahrzeug 1 befindlichen Beacon 6 ausgesendet wurde. Wenn das mobile Gerät 3, 3' somit das Bluetooth-Signal 10 mit dem Identifikationsmittel des Beacons 6 empfängt und erkennt, muss es in der Nähe von dem Bluetooth-Beacon 6 sein. Daraus kann geschlossen werden, dass sich das mobile Gerät 3, 3' in dem Fahrzeug 1 befindet.

Alternativ oder zusätzlich das mobile Gerät 3, 3' seine Position per GNSS bestimmen und daraus ebenfalls schlussfolgern, dass es sich in dem Fahrzeug 1 befindet. Smartphones weisen heute üblicherweise eine Positionserkennung mit Hilfe eines GNSSS-Moduls auf. Dabei werden die Signale 11 von dem Satelliten 7 in bekannter Weise ausgewertet, um die Position des mobilen Gerätes 3, 3' zu bestimmen. Wenn die ermittelte Position mit einer vorbekannten Position des Fahrzeugs 1 oder dessen Fahrstrecke übereinstimmt, kann geschlussfolgert werden, dass sich das mobile Gerät 3, 3' in dem Fahrzeug 1 befindet.

Wenn das mobile Gerät 3, 3' ermittelt hat, dass es sich in dem Verkehrsmittel 1 befindet, werden erst dann die nächste Schritte des erfindungsgemäßen Verfahrens durchgeführt. Dies hat den Vorteil, dass die nächsten Schritte nicht permanent von dem mobilen Gerät 3, 3' ausgeführt werden müssen und dadurch Energie eingespart wird.

Nachdem also festgestellt wurde, dass sich das mobile Gerät 3, 3' in dem Fahrzeug 1 befindet, wird anschließend ein Bluetooth-Scan durch das mobile Gerät 3, 3' durchgeführt. Bei dem Bluetooth-Scan wird von dem mobilen Gerät 3, 3' nach Bluetooth-Signalen 12 in der Umgebung gesucht. Diese Suche kann in regelmäßigen zeitlichen Abständen durchgeführt werden und es werden alle Arten von empfangenen Bluetooth-Nachrichten 12 aufgezeichnet. Die Bluetooth-Signale 12 enthalten jeweils ein Identifikationsmittel (nicht dargestellt) und eine bestimmte Signalstärke und werden von verschiedenen Bluetooth-Quellen 5 in dem Fahrzeug 1 ausgesendet. Diese Bluetooth-Quellen 5 können beispielsweise andere Mobilfunkgeräte, Smartphones, Smartwatches, Laptops oder andere Bluetooth-Geräte sein. Selbstverständlich können auch die mobilen Gerät 3, 3' selbst als Bluetooth-Quellen 5 für andere mobile Geräte 3, 3' agieren, die das erfindungsgemäße Verfahren durchführen. Dies ist in der Figur der Einfachheit halber aber nicht dargestellt. Die Suche nach Bluetooth-Signalen in der Umgebung wird von dem mobilen Gerät 3, 3' für eine bestimmte Zeitspanne, beispielsweise etwa 15-20 Sekunden, durchgeführt.

Anschließend werden die gefundenen Bluetooth-Signale 12 von dem mobilen Gerät 3, 3' bei der beispielhaften Ausführungsform in der Figur an den Server-Computer 8 übermittelt. Gegebenenfalls kann die Datenmenge der Bluetooth-Signale 12 vor dem Übermitteln von dem mobilen Gerät 3, 3' reduziert werden, um die Übermittlung zu optimieren und die mobile Datenübermittlung nicht unnötig zu belasten. Die Übermittlung der Bluetooth-Signale 12 geschieht funkbasiert, beispielsweise über das Mobilfunknetz, WLAN oder Ähnliches.

Auf dem Server-Computer 8 wird eine Software ausgeführt, die zur erfindungsgemäßen Auswertung der übermittelten Bluetooth-Signale oder Daten ausgebildet ist. Die oben gennannten erfindungsgemäßen Schritte werden in der beispielhaften Ausführungsform von einer Vielzahl von mobilen Geräten 3, 3' ausgeführt und die Bluetooth-Signale 12 an den Server-Computer 8 übermittelt.

Der Server-Computer 8 aggregiert die Bluetooth-Signale 12 von den verschiedenen mobilen Geräten 3, 3'. Bluetooth-Signale 12, die in räumlicher und/oder zeitlicher Nähe erfasst wurden, werden auf den Server-Computer 8 gruppiert. Aus den einzelnen Gruppen werden jeweils Schätzwerte für die Anzahl von Personen in unterschiedlichen Abschnitten des Fahrzeugs 1 zu den jeweiligen Zeiten ermittelt. Bei der Ermittlung des Schätzwertes werden beispielsweise die Identifikationsmittel und Signalstärken der Bluetooth-Signale 12 berücksichtigt. So können beispielsweise Bluetooth-Signale 12 mit einer Signalstärke unterhalb von einem Grenzwert herausgefiltert und nicht berücksichtigt werden. Aus den Identifikationsmitteln, die jedes Bluetooth-Signal 12 enthält, kann der jeweilige Ursprung des Bluetooth-Signals 12 erkannt werden. So kann beispielsweise ermittelt werden, von welcher Bluetooth-Quelle 5 das Bluetooth-Signal 12 stammt. Dadurch können ebenfalls bestimmte Bluetooth-Signale 12 stärker berücksichtigt und andere Signale weniger berücksichtigt werden. Beispielsweise können Bluetooth-Signale 12 von Smartwatches ignoriert werden, weil davon auszugehen ist, dass Personen 2 mit Smartwatches auch ein Smartphone bei sich haben, das ebenfalls Bluetooth-Signale aussendet. So wird die Genauigkeit des Schätzwertes gesteigert.

Alternativ kann die Ermittlung des Schätzwertes 14 und somit die Auswertung der empfangenen Bluetooth-Signale 12 alternativ auch auf dem mobilen Gerät 3, 3' durchgeführt werden. Anschließend kann der ermittelte Schätzwert 14 an den Server-Computer 8 übermittelt werden. Dies hat den Vorteil, dass weniger Daten an den Server-Computer 8 übermittelt werden müssen und eine höhere Datensicherheit gegeben ist.

Die Ermittlung des Schätzwertes auf dem Server-Computer 8 hat allerdings den Vorteil, dass dem Server-Computer 8 die Bluetooth-Signale 8 von einer Vielzahl von mobilen Geräten 3, 3' vorliegt und dadurch die Genauigkeit des Schätzwertes erhöht werden kann.

Der erfindungsgemäß ermittelte Schätzwert 14 wird anschließend in der beispielshaften Ausführungsform in der Figur an das Fahrgastleitsystem 9 übermittelt. Hierbei können auch mehrere Schätzwerte 14 übermittelt werden, die beispielsweise für unterschiedliche Abschnitte des Fahrzeugs 1 ermittelt wurden.

Das Fahrgastleitsystem 9 kann die Schätzwerte 14 verwenden, um beispielsweise auf einem Bahnsteig wartende Fahrgäste so zu lenken, dass diese in Abschnitte des Fahrzeugs 1 einsteigen, die wenig belegt sind.

## Patentansprüche

1. Verfahren zum Ermitteln eines Schätzwertes (14) für eine Anzahl von Personen (2) in einem vorbestimmten Bereich, insbesondere einem öffentlichen Verkehrsmittel (1) oder Bahnsteig,
bei dem zunächst ermittelt wird, dass sich wenigstens ein mobiles Gerät (3, 3') in dem vorbestimmten Bereich befindet, bei dem anschließend von dem wenigstens einen mobilen Gerät (3, 3') eine Suche nach Bluetooth-Signalen (12) in dessen Umgebung durchgeführt wird und
bei dem unter Berücksichtigung der gefundenen Bluetooth-Signale (12) ein Schätzwert (14) für die Anzahl von Personen (2) in zumindest einem Abschnitt des vorbestimmten Bereichs ermittelt wird.

2. Verfahren nach Anspruch 1,
**dadurch gekennzeichnet, dass** beim Ermitteln des Schätzwertes (14) Bluetooth-Signale (12) berücksichtigt werden, die von mehreren mobilen Geräten (3, 3') empfangenen wurden.

3. Verfahren nach Anspruch 1 oder 2,
**dadurch gekennzeichnet, dass** beim Ermitteln des Schätzwertes (14) Identifikationsmittel der empfangenen Bluetooth-Signale (12) berücksichtigt werden.

4. Verfahren nach einem der oben genannten Ansprüche,
**dadurch gekennzeichnet, dass** Signalstärken der empfangenen Bluetooth-Signale (12) erfasst und beim Ermitteln des Schätzwertes (14) berücksichtigt werden.

5. Verfahren nach einem der oben genannten Ansprüche,
**dadurch gekennzeichnet, dass** Ursprünge der empfangenen Bluetooth-Signale (12) ermittelt und beim Ermitteln des Schätzwertes (14) berücksichtigt werden.

6. Verfahren nach einem der oben genannten Ansprüche,
**dadurch gekennzeichnet, dass** die Ermittlung des Schätzwertes (14) auf dem mobilen Gerät (3, ') durchgeführt wird.

7. Verfahren nach einem der oben genannten Ansprüche 1 bis 6,
**dadurch gekennzeichnet, dass** die empfangenen Bluetooth-Signale (12) oder zumindest Daten in Zusammenhang mit den empfangenen Bluetooth-Signalen (12) an wenigstens einen Server-Computer (8) übermittelt werden und der Schätzwert (14) durch den Server-Computer (8) ermittelt wird.

8. Verfahren nach Anspruch 7,
**dadurch gekennzeichnet, dass** eine Datenmenge der empfangenen Bluetooth-Signale (12) vor dem Übermitteln reduziert wird.

9. Verfahren nach einem der oben genannten Ansprüche 2 bis 7,
**dadurch gekennzeichnet, dass** die empfangenen Bluetooth-Signale (12) von mehreren mobilen Geräten (3, 3') oder Teile davon oder die ermittelten Schätzwerte (14) gruppiert werden, insbesondere durch Ermitteln einer räumlichen und/oder zeitlichen Nähe, und mittels der Gruppen ein Schätzwert (14) für eine Personendichte an einem Ort und/oder zu einer Zeit ermittelt wird.

10. Verfahren nach einem der oben genannten Ansprüche,
**dadurch gekennzeichnet, dass** zum Ermitteln, dass sich das mobile Gerät (3, 3') in dem vorbestimmten Bereich befindet, eine vom mobilen Gerät (3, 3') ermittelte Position und/oder Signale von wenigstens einem Bluetooth-Beacon (6) ausgewertet werden.

11. Computerprogrammprodukt mit Programmbefehlen zur Durchführung des Verfahrens nach einem der Ansprüche 1 bis 10.

12. Computerprogrammprodukt nach Anspruch 11,
**dadurch gekennzeichnet, dass** wenigstens ein mobiles Gerät (3, 3') und/oder wenigstens ein Server-Computer (8) zur Durchführung des oben genannten Verfahren nach Ansprüchen 1 bis 9 veranlasst werden, wenn die Programmbefehle durch das mobile Gerät (3, 3') und/oder den Server-Computer (8) ausgeführt werden.

13. Bereitstellungsvorrichtung für das Computerprogrammprodukt nach Anspruch 11 oder 12, wobei die Bereitstellungsvorrichtung das Computerprogrammprodukt speichert und/oder bereitstellt.

14. Server-Computer (8) zum Ermitteln eines Schätzwertes (14) für eine Anzahl von Personen (2) in einem vorbestimmten Bereich, insbesondere einem öffentlichen Verkehrsmittel (1) oder Bahnsteig,
wobei der Server-Computer (8) zum Empfangen von Bluetooth-Signalen (12) in der Umgebung von wenigstens einem in dem vorbestimmten Bereich befindlichen mobilen Gerät (3, 3') oder von Daten in Zusammenhang mit den Bluetooth-Signalen (12) ausgebildet ist, die von dem wenigstens einen mobilen Gerät (3, 3') bei einer Suche nach Bluetooth-Signalen (12) in der Umgebung gefunden wurden,
und der Server-Computer (8) zum Ermitteln eines Schätzwertes (14) für die Anzahl von Personen (2) in zumindest einem Abschnitt des vorbestimmten Bereichs ausgebildet ist.

15. Mobiles Gerät (3, 3') zum Ermitteln eines Schätzwertes (14) für eine Anzahl von Personen (12) in einem vorbestimmten Bereich, insbesondere einem öffentlichen Verkehrsmittel (1) oder Bahnsteig,
wobei das mobile Gerät (3, 3') ausgebildet ist, zu ermitteln, dass es sich in dem vorbestimmten Bereich befindet, und ausgebildet ist, anschließend eine Suche nach Bluetooth-Signalen (12) in seiner Umgebung durchzuführen,
und ausgebildet ist, unter Berücksichtigung der gefundenen Bluetooth-Signale (12), den Schätzwert (14) für die Anzahl von Personen (2) in zumindest einem Abschnitt des vorbestimmten Bereichs zu ermitteln, oder die empfangenen Bluetooth-Signale (12) oder zumindest Daten in Zusammenhang mit den empfangenen Bluetooth-Signalen (12) an wenigstens einen Server-Computer (8) zum Ermitteln des Schätzwerts (14) zu übermitteln.
